(19) **Europäisches Patentamt / European Patent Office / Office européen des brevets**

(11) **EP 3 950 869 A1**

(12) **EUROPEAN PATENT APPLICATION**
published in accordance with Art. 153(4) EPC

(43) Date of publication:
**09.02.2022 Bulletin 2022/06**

(21) Application number: **20777846.5**

(22) Date of filing: **17.03.2020**

(51) International Patent Classification (IPC):
**C09J 7/35** (2018.01)   **C09J 7/38** (2018.01)
**C09J 11/06** (2006.01)   **C09J 11/08** (2006.01)
**C09J 163/00** (2006.01)

(52) Cooperative Patent Classification (CPC):
**C09J 7/35; C09J 7/38; C09J 11/06; C09J 11/08; C09J 163/00**

(86) International application number:
**PCT/JP2020/011847**

(87) International publication number:
**WO 2020/196119 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.03.2019 JP 2019065068**

(71) Applicant: **NITTO DENKO CORPORATION**
**Ibaraki-shi**
**Osaka 567-8680 (JP)**

(72) Inventors:
• **TANAKA, Akiko**
  **Ibaraki-shi, Osaka 567-8680 (JP)**
• **NITTA, Ayumi**
  **Ibaraki-shi, Osaka 567-8680 (JP)**
• **YASUI, Atsushi**
  **Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **CURABLE ADHESIVE SHEET AND METHOD FOR PRODUCING CURABLE ADHESIVE SHEET**

(57)    The invention relates to a curable adhesive sheet which has an adhesive layer formed from an adhesive composition containing an epoxy resin, a latent curing agent and a gelling agent and in which the latent curing agent has a reaction initiation temperature of 45°C or higher and 120°C or lower.

*FIG. 1*

EP 3 950 869 A1

**Description**

TECHNICAL FIELD

The present invention relates to a curable adhesive sheet and a method for producing a curable adhesive sheet.

BACKGROUND ART

In the electronics industry, to mechanically adhere many components in an electronic device, semi-structural adhesives have been used. A semi-structural adhesive tape is typically produced by coating a liner with a semi-structural adhesive together with a latent curing agent and used.

When components in an electronic device are adhered using a semi-structural adhesive tape, there has been a problem because the high curing activation temperature damages the delicate parts in the electronic device.

To solve the problem, adhesive tapes which can be cured at a relatively low temperature have been examined. For example, PTL 1 discloses a low-temperature curable epoxy tape containing a curing agent layer which has a first surface and a second surface on the opposite side and which contains a scrim, a binder layer that at least partially enclose the scrim and a latent curing agent dispersed in the binder layer, a first epoxy layer provided on the first surface of the curing agent layer and a second epoxy layer provided on the second surface of the curing agent layer.

CITATION LIST

PATENT LITERATURE

PTL 1: JP-A-2013-525984

SUMMARY OF INVENTION

TECHNICAL PROBLEM

To produce an adhesive sheet, it is required to form a resin composition containing a solid material such as epoxy and acrylic materials into a sheet form. When a resin composition containing such a solid material is formed into a sheet, it is required to apply the composition on the surface of a release film or the like as even as possible. Accordingly, it is thought that the resin composition is applied and dried on a release film or the like to form a sheet after mixing the materials after once heating the materials to decrease the viscosity or after once dissolving the materials in a solvent.

However, in the case where a resin composition containing a latent curing agent is used, curing reaction starts during the sheet formation when the resin composition is heated to decrease the viscosity. The same problem arises also when a solvent is used. Accordingly, sheet formation by the above method is difficult.

Therefore, a problem of the invention is to provide a curable adhesive sheet which has tackiness and which can be cured at a low temperature and a production method thereof.

SOLUTION TO PROBLEM

The present inventors have conducted extensive investigation to solve the problem. As a result, the inventors have found that a curable adhesive sheet which can be cured at a low temperature and which has tackiness can be provided using a latent curing agent having a specific reaction initiation temperature as a curing agent and using a gelling agent, and the invention has been thus completed.

In an embodiment, the invention relates to a curable adhesive sheet which has an adhesive layer formed from an adhesive composition containing an epoxy resin, a latent curing agent and a gelling agent and in which the latent curing agent has a reaction initiation temperature of 45°C or higher and 120°C or lower.

In the curable adhesive sheet in an embodiment of the invention, the latent curing agent is preferably an amine-based compound.

In an embodiment of the invention, the curable adhesive sheet preferably contains 15 to 40 parts by mass of the latent curing agent based on 100 parts by mass of the epoxy resin.

In the curable adhesive sheet in an embodiment of the invention, the gelling agent is preferably a core-shell acrylic resin.

In an embodiment of the invention, the curable adhesive sheet preferably contains 5 to 40 parts by mass of the gelling agent based on 100 parts by mass of the epoxy resin.

In the curable adhesive sheet in an embodiment of the invention, 50 mass% or less of the epoxy resin is preferably an epoxy resin which is solid at 25°C.

In an embodiment, the invention relates to a method for producing a curable adhesive sheet including a step (1) of preparing an adhesive composition containing an epoxy resin, a latent curing agent having a reaction initiation temperature of 45°C or higher and 120°C or lower and a gelling agent and a step (2) of forming an adhesive layer in a sheet form formed from the adhesive composition and maintaining at 30°C to 43°C to form a sheet.

ADVANTAGEOUS EFFECTS OF INVENTION

According to embodiments of the invention, a curable adhesive sheet which has tackiness and which can be cured at a low temperature and a production method thereof can be provided. Because the sheet has tackiness in the uncured state, the sheet can be adhered to an adherend as a sheet and can also exhibit adhesiveness by curing at a low temperature.

BRIEF DESCRIPTION OF DRAWINGS

[Fig. 1] Fig. 1 is a figure illustrating the curable adhesive sheet 1 (base material-less) in an embodiment of the invention.
[Fig. 2] Fig. 2 is a figure illustrating the curable adhesive sheet (base material-having) in an embodiment of the invention, in which (a) of Fig. 2 is a figure illustrating a curable adhesive sheet 2a having an adhesive layer only on one surface of a base material, and (b) of Fig. 2 is a figure illustrating a curable adhesive sheet 2b having adhesive layers on both surfaces of a base material.
[Fig. 3] Fig. 3 is a figure illustrating the curable adhesive sheet in an embodiment of the invention in which an adhesive layer 11 is provided on a first adherend 31.
[Fig. 4] Fig. 4 is a figure illustrating an adhered structure 100 obtained using the curable adhesive sheet in an embodiment of the invention.

DESCRIPTION OF EMBODIMENTS

Embodiments of the invention are explained in detail below. In this regard, the invention is not limited to the embodiments explained below.

In the present specification, "A to B" indicating a range means "A or more and B or less". Moreover, in the present specification, "mass%" and "weight%" are considered synonyms, and "parts by mass" and "parts by weight" are considered synonyms.

[Curable Adhesive Sheet]

The curable adhesive sheet in an embodiment of the invention has an adhesive layer formed from an adhesive composition containing an epoxy resin, a latent curing agent and a gelling agent, and the latent curing agent is characterized by having a reaction initiation temperature of 45°C or higher and 120°C or lower. The curable adhesive sheet in an embodiment of the invention is a sheet which is in the uncured state and which has tackiness. Because the sheet has tackiness in the uncured state, the sheet can be adhered to an adherend as a sheet and can also exhibit adhesiveness by curing at a low temperature.

The curable adhesive sheet in an embodiment of the invention has an adhesive layer formed from an adhesive composition. The components that the adhesive composition contains are explained in detail below.

<Epoxy Resin>

The adhesive composition in an embodiment of the invention contains an epoxy resin.

The kind of the epoxy resin is not particularly limited. Examples thereof include bisphenol-based epoxy resins such as bisphenol A-type epoxy resin, bisphenol F-type epoxy resin, bisphenol S-type epoxy resin and hydrogenated bisphenol A-type epoxy resin, naphthalene-type epoxy resins, biphenyl-type epoxy resins, dicyclo-type epoxy resins, alicyclic-based epoxy resins, triglycidyl isocyanurate epoxy resins, hydantoin epoxy resins, glycidyl ether-based epoxy resins, glycidyl amino-based epoxy resins and the like.

A bisphenol-based epoxy resin is preferable, and bisphenol A-type epoxy resin and bisphenol F-type epoxy resin are more preferable.

A kind of epoxy resin can be used alone, or two or more kinds can also be used in combination.

The epoxy resin may be in any of liquid, semi-solid and solid forms at normal temperature.

An epoxy resin which is liquid at normal temperature is specifically liquid at 25°C. The viscosity of the liquid epoxy resin is, for example, 30 Pa·s or more, preferably 80 Pa·s or more at 25°C. Moreover, the viscosity of the liquid epoxy resin is, for example, 500 Pa·s or less, preferably 300 Pa·s or less at 25°C.

An epoxy resin which is solid at normal temperature is specifically solid at 25°C. The softening point of the solid epoxy resin is, for example, 70°C or higher, preferably 75°C or higher.

Preferably, 50 mass% or less of the epoxy resin contained in the adhesive composition in an embodiment of the invention is an epoxy resin which is solid at 25°C. More preferably, 45 mass% or less of the epoxy resin contained in the adhesive composition in an embodiment of the invention is an epoxy resin which is solid at 25°C, and further preferably, 30 mass% or less thereof is an epoxy resin which is solid at 25°C.

Preferably, 0 mass% or more of the epoxy resin contained in the adhesive composition in an embodiment of the invention is an epoxy resin which is solid at 25°C, and more preferably, 10 mass% or more thereof is an epoxy resin which is solid at 25°C.

When 50 mass% or less of the epoxy resin is an epoxy resin which is solid at 25°C, the viscosity of the adhesive composition does not become too high, and mixing of the curing agent and the gelling agent is easy. Moreover, when 10 mass% or more of the epoxy resin is an epoxy resin which is solid at 25°C, the time required for sheet formation can be shortened.

The percentage of the epoxy resin blended is, for example, 40 mass% or more based on the total amount of the adhesive composition, preferably 50 mass% or more. The percentage of the epoxy resin blended is, for example, 100 mass% or less based on the total amount of the adhesive composition, preferably 70 mass% or less. In the range, simpler and stronger adhesion is possible.

The adhesive composition in an embodiment of the invention can also contain a resin other than the epoxy resin. Examples thereof include a silicone compound, a polyol compound such as polypropylene glycol, a urethane resin, an acrylic resin and the like.

<Latent Curing Agent>

The adhesive composition in an embodiment of the invention contains a latent curing agent.

The latent curing agent refers to a curing agent which is solid at normal temperature (specifically at 25°C) and which is activated at a certain temperature, mixes with the epoxy resin and cures the epoxy resin. In particular, in an embodiment of the invention, the latent curing agent is characterized by starting the activity in a temperature range of 45°C or higher and 120°C or lower. That is, the latent curing agent has a reaction initiation temperature of 45°C or higher and 120°C or lower.

When the reaction initiation temperature of the latent curing agent is in the range, curing can be prevented from starting during the preparation or the storage of the resin composition, and the reaction can be advanced at a relatively low temperature for curing.

The latent curing agent in an embodiment of the invention has a reaction initiation temperature of 120°C or lower, and a latent curing agent having a reaction initiation temperature of 100°C or lower is preferable. The latent curing agent in an embodiment of the invention has a reaction initiation temperature of 45°C or higher, and a latent curing agent having a reaction initiation temperature of 50°C or higher is preferable.

The reaction initiation temperature of the latent curing agent in an embodiment of the invention can be measured, for example, by the following method.

About 5 mg of a resin composition obtained by mixing 20 parts by mass of a latent curing agent in 100 parts by mass of a bisphenol F-type epoxy (jER806, manufactured by Mitsubishi Chemical Corporation) is weighed in an aluminum closed cell, and the heat flow behavior of the resin composition is obtained using a temperature-modulated DSC (product name "Q-2000", manufactured by TA Instruments Inc.) in a nitrogen atmosphere of 50 mL/min at a heating rate of 2°C/min. The exothermic initiation temperature, which is the temperature at which the heat flow behavior starts, is regarded as the reaction initiation temperature of the latent curing agent.

The kind of the latent curing agent in an embodiment of the invention is not particularly restricted as long as the latent curing agent has the reaction initiation temperature. Examples thereof include an amine-based compound, a urea-based compound, an amide-based compound, a dihydrazide-based compound, an imidazole-based compound, an imidazoline-based compound and the like.

Examples of the amine-based compound include ethylenediamine, propylenediamine, diethylenetriamine, triethylenetetramine, amine adducts thereof, metaphenylenediamine, diaminodiphenylmethane, diaminodiphenylsulfone and the like.

Examples of the urea-based compound include 3-(3,4-dichlorophenyl)-1,1-dimethylurea (DCMU), N'-phenyl-N,N-dimethylurea, 1,1'-(methyl-m-phenylene)bis(3,3'-dimethylurea) and the like.

Of such urea-based compounds, 3-(3,4-dichlorophenyl)-1,1-dimethylurea (DCMU) is preferable.

Examples of the amide-based compound include polyamide and the like.

Examples of the hydrazide-based compound include dihydrazides such as adipic acid dihydrazide and the like.

Examples of the imidazole-based compound include methylimidazole, 2-ethyl-4-methylimidazole, ethylimidazole, isopropylimidazole, 2,4-dimethylimidazole, phenylimidazole, undecylimidazole, heptadecylimidazole, 2-phenyl-4-methylimidazole and the like.

Examples of the imidazoline-based compound include methylimidazoline, 2-ethyl-4-methylimidazoline, ethylimidazoline, isopropylimidazoline, 2,4-dimethylimidazoline, phenylimidazoline, undecylimidazoline, heptadecylimidazoline, 2-phenyl-4-methylimidazoline and the like.

A kind of such latent curing agents may be used alone, or a combination thereof can also be used.

Of such latent curing agents, an amine-based compound is preferable.

The percentage of such a latent curing agent blended is, for example, 15 to 40 parts by mass based on 100 parts by mass of the epoxy resin, preferably 20 to 35 parts by mass, more preferably 20 to 30 parts by mass. In the range, curing can be prevented from starting during the storage, and the reaction can be advanced at a relatively low temperature for curing.

<Gelling Agent>

The adhesive composition in an embodiment of the invention contains a gelling agent.

Because the adhesive composition in an embodiment of the invention contains a gelling agent, the adhesive composition is solidified (gelated) and can maintain the sheet shape. Accordingly, because the composition contains a gelling agent, the composition can be more evenly applied on the surface of a release film, a base material or the like, and sheet formation becomes possible.

The gelling agent is not particularly restricted as long as the gelling agent has the action. Examples thereof include silica powder which has been surface-treated with a silane coupling agent or the like, mineral fibers such as sepiolite, a core-shell acrylic resin and the like. Of the examples, a core-shell acrylic resin is preferable in view of the compatibility with the epoxy resin.

Here, the core-shell type refers to, for example, a pearl-like fine particle in which a core layer made of a thermoplastic resin such as an acrylic resin is coated with a shell layer made of the same resin as that of the core layer or another resin. Depending on the use, a multilayer structure may also be used.

An example of the core-shell acrylic resin is a core-shell emulsion in which an acrylic, styrene acrylic or styrene methacrylic resin is used for the core layer and in which an acrylic, styrene acrylic or styrene methacrylic resin is used for the shell layer. Specific examples thereof include Dianal (registered trademark) LP-3106 and Dianal (registered trademark) LP-3109 manufactured by Mitsubishi Chemical Corporation, Joncryl (registered trademark) 74J, Joncryl (registered trademark) 537 and PDX7677 manufactured by BASF, Zefiac manufactured by Aica Kogyo Company, Limited and the like.

The percentage of such a gelling agent blended is, for example, 5 to 40 parts by mass based on 100 parts by mass of the epoxy resin, preferably 10 to 30 parts by mass, more preferably 10 to 20 parts by mass. In the range, the composition can be more evenly applied on the surface of a release film, a base material or the like, and sheet formation becomes easy.

<Other Components>

To the adhesive composition in an embodiment of the invention, a filler such as silica, mica and calcium carbonate can also be blended for the purpose of adjusting the elastic modulus of the cured layer or for another purpose. The amount of the filler blended is not particularly limited but is, for example, 1 part by mass or more based on 100 parts by mass of the adhesive composition, preferably 10 parts by mass or more. The amount of the filler blended is, for example, 100 parts by mass or less based on 100 parts by mass of the adhesive composition, preferably 80 parts by mass or less.

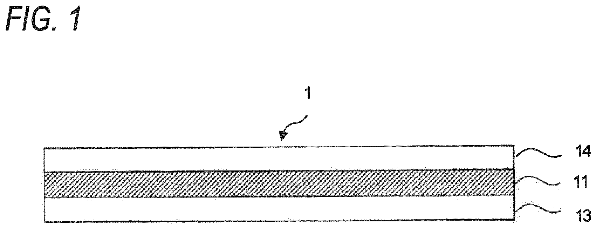

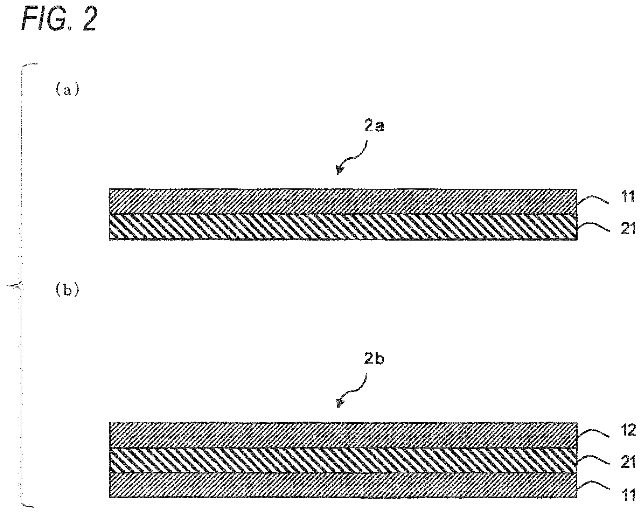

The curable adhesive sheet in an embodiment of the invention has an adhesive layer formed from the adhesive composition. The adhesive sheet in the embodiment may be a base material-less adhesive sheet in which an adhesive layer is held on a release sheet as illustrated in Fig. 1 and may also be a base material-having adhesive sheet which has an adhesive layer(s) on one surface or both surfaces of a base material sheet (support) as illustrated in (a) of Fig. 2 and (b) of Fig. 2. The concept of the adhesive sheet here can include those which are called an adhesive tape, an adhesive label, an adhesive film and the like.

The adhesive layer is typically formed continuously but is not limited to the form. For example, the adhesive layer may be formed in a regular or random pattern of dots, stripes or the like. The adhesive sheet in the embodiment may be a roll and may be a sheet. Alternatively, an adhesive sheet in the form of having been further processed in any of various shapes may also be used.

The curable adhesive sheet in an embodiment of the invention can be in the form of a base material-having adhesive sheet including a base material adhered on the other back surface of the adhesive layer. In (a) of Fig. 2, a schematic cross section of an example of the structure of the curable adhesive sheet in an embodiment of the invention in which an adhesive layer is formed on one surface of a base material is illustrated. The adhesive sheet 2a illustrated in (a) of Fig. 2 has a base material 21 and an adhesive layer 11 formed on one surface of the base material.

As another aspect, in (b) of Fig. 2, a schematic cross section of an example of the structure in which adhesive layers are formed on both surfaces of a base material 21 is illustrated. The adhesive sheet 2b illustrated in (b) of Fig. 2 has a base material 21 and a first adhesive layer 11 and a second adhesive layer 12 formed on both surfaces of the base material.

The base material is a material which gives toughness to the layer, and examples thereof include a glass cloth, a resin-impregnated glass cloth, a synthetic resin nonwoven cloth, metal foil, carbon fibers, a polyester film, a foam sheet and the like.

The glass cloth is a cloth of glass fibers, and a known glass cloth is used. Of such glass clothes, considering the close adhesiveness of the base material and the adhesive layer, a silane coupling agent-treated glass cloth which has been treated with a silane coupling agent is preferable.

Examples of the silane coupling agent include known silane coupling agents such as aminosilane, epoxysilane and acryloxysilane. A kind of such silane coupling agents may be used alone, or a combination thereof can also be used. Of such silane coupling agents, epoxysilane is preferable.

The resin-impregnated glass cloth is the glass cloth described above which has been impregnated with a synthetic resin such as a thermosetting resin and a thermoplastic resin, and a known resin-impregnated glass cloth is used.

Examples of the thermosetting resin include an epoxy resin, a urethane resin, a melamine resin, a phenolic resin and the like. Examples of the thermoplastic resin include a vinyl acetate resin, an ethylene-vinyl acetate copolymer (EVA), a vinyl chloride resin, an EVA-vinyl chloride resin copolymer and the like. A kind of such thermosetting resins and such thermoplastic resins may be used alone, or a combination (for example, a combination of a melamine resin and a vinyl acetate resin) can also be used.

Examples of the synthetic resin nonwoven cloth include a polypropylene resin nonwoven cloth, a polyethylene resin nonwoven cloth, an ester-based resin nonwoven cloth and the like.

Examples of the metal foil include known metal foil such as aluminum foil and steel foil.

The carbon fibers are fibers containing carbon as the main component formed in a cloth, and known carbon fibers are used.

Examples of the polyester film include a polyethylene terephthalate (PET) film, a polyethylene naphthalate (PEN) film, a polybutylene terephthalate (PBT) film and the like.

The foam sheet is an amorphous-based crosslinked type, and examples thereof include polyurethane, polyolefin (polyethylene, polypropylene, copolymers thereof or the like), silicone, resins such as an acrylic resin, rubber and the like.

Of such base materials, a glass cloth is preferable. When a glass cloth is used as the base material, a flexible adhesive sheet having high insulation reliability can be provided, and, for example, galvanic corrosion, which is a concern when different metal materials such as iron-aluminum are adhered, can be prevented.

The thickness of such a base material is, for example, 25 $\mu$m or more, preferably 50 $\mu$m or more. The thickness of the base material is, for example, 300 $\mu$m or less, preferably 250 $\mu$m or less.

When the thickness of the base material is less than 25 $\mu$m, the hardness necessary as the base material cannot be secured, and the adhesion working operation of the adhesive sheet sometimes deteriorates. On the other hand, when the thickness of the base material is within the range, the adhesion operation property of the adhesive sheet can be improved.

[Production Method of Curable Adhesive Sheet]

The method for producing a curable adhesive sheet according to an embodiment of the invention includes a step (1) of preparing an adhesive composition containing an epoxy resin, a latent curing agent having a reaction initiation temperature of 45°C or higher and 120°C or lower and a gelling agent and a step (2) of forming an adhesive layer in a sheet form formed from the adhesive composition and maintaining at 30°C to 43°C to form a sheet.

Each step is explained below.

<Step (1) of preparing an adhesive composition containing an epoxy resin, a latent curing agent having a reaction initiation temperature of 45°C or higher and 120°C or lower and a gelling agent>

The step (1) is a step of preparing the adhesive composition according to an embodiment of the invention. To obtain the adhesive composition according to an embodiment of the invention, for example, an epoxy resin, a latent curing agent and a gelling agent are blended, and a resin composition is thus prepared. Those described above can be used in the same manners as the components.

<Step (2) of forming an adhesive layer in a sheet form formed from the adhesive composition and maintaining at 30°C to 43°C to form a sheet>

To produce a sheet using the adhesive composition prepared in the step (1), an adhesive layer in a sheet form formed from the adhesive composition is first formed. For the purpose, in the case of a base material-less sheet, the adhesive composition is formed into a sheet form on the surface of a release film.

In the case of a base material-having sheet, the adhesive composition is formed into a sheet form on the base material described above. Although an aspect in which the sheet is base material-less and in which a sheet is formed on the surface of a release film is explained as an example below, the aspects of the invention are not limited to the aspect.

That the adhesive composition is formed into a sheet form on the surface of a release film specifically means that, as illustrated in Fig. 1, after applying the adhesive composition on the surface of a release film 13, by providing another release film 14 from the side to which the adhesive composition has been applied (the surface opposite to the surface in contact with the release film), an adhesive layer 11 is formed in a sheet form between the release films. That is, by sandwiching the adhesive composition between the two release films 13 and 14, the adhesive layer 11 may be formed in a sheet form between the release films 13 and 14.

The release film is, for example, a release sheet of a roughly rectangular flat plate shape, and the upper surface and the lower surface are flat.

The release film is formed into a film from a resin material or the like, which is, for example, polyolefin (specifically, polyethylene or polypropylene), a vinyl polymer such as an ethylene-vinyl acetate copolymer (EVA), polyester such as polyethylene terephthalate and polycarbonate, a fluoro-resin such as polytetrafluoroethylene or the like. The release film can also be formed from a metal material such as iron, aluminum and stainless steel or the like.

The release film is preferably a polyester film, more preferably a polyethylene terephthalate film.

The surface of the release film may be subjected to appropriate release treatment according to need.

The thickness of the release film is, for example, 10 $\mu$m or more and 1 000 $\mu$m or less.

Examples of the application method for applying the adhesive composition to the surface of the release film include the doctor blade method, the roll method, the screen method, the gravure method and the like.

In the above manner, the adhesive layer in a sheet form formed from the adhesive composition is formed on the release film.

In the case in which the sheet is a base material-having sheet and in which the adhesive layer is formed on a base material, a direct method of directly providing the adhesive composition to form the adhesive layer may be used, as in the case of forming the adhesive layer on a release film. Alternatively, a transferring method of transferring an adhesive layer formed on the release film to a base material may also be used.

Subsequently, the adhesive layer formed in a sheet form on the release film or the base material is maintained at 30 to 43°C. As a result, the gelling agent solidifies, and a sheet is formed. By maintaining the adhesive layer formed in a sheet form at 30 to 43°C, the adhesive composition can be prevented from being cured through activation of the latent curing agent.

The temperature for maintaining the adhesive layer formed in a sheet form is 30 to 43°C, preferably 33 to 40°C.

The period for maintaining the adhesive layer formed in a sheet form is not particularly restricted as long as the adhesive composition is not cured through activation of the latent curing agent, but the period is generally one to seven days, preferably two to four days.

To secure the adhesiveness after curing, the thickness of the sheet of the adhesive layer is, for example, 50 $\mu$m or more, preferably 80 $\mu$m or more, more preferably 100 $\mu$m or more. The thickness of the sheet of the adhesive layer is, for example, 2000 $\mu$m or less, preferably 1000 $\mu$m or less, more preferably 700 $\mu$m or less. In particular, to achieve both excellent curing property and high adhesiveness after curing, the thickness of the adhesive layer is preferably 100 to 700 $\mu$m.

Next, the method for using the curable adhesive sheet in an embodiment of the invention is explained. Although a method for adhering adherends (a first adherend and a second adherend) (base material-less) is explained below as an example, the method for using the curable adhesive sheet in embodiments of the invention is not limited to the method.

First, a sheet of an adhesive layer 11 is transferred to the surface of a first adherend 31 from the release film. Specifically, first, the adhesive layer 11 is brought into contact with the first adherend 31, and then the release film is peeled from the adhesive layer 11.

When the adhesive layer 11 is sandwiched between two release films, for example, one release film is first peeled off. Then, the exposed surface of the exposed adhesive layer 11 is brought into contact with a first adherend 2, and then the release film is peeled from the adhesive layer 11.

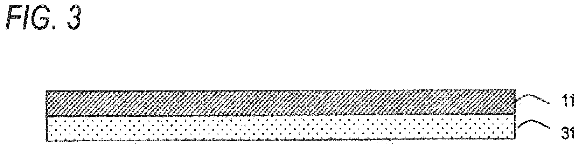

In this manner, the adhesive layer 11 is provided on the first adherend 31 as illustrated in Fig. 3.

Next, a second adherend 41 is brought into contact with the adhesive layer 11 provided on the first adherend 31 above from the side on which the adhesive layer 11 has been provided. The method for bringing the second adherend 41 into contact with the side of the first adherend 31 to which the adhesive layer 11 has been provided is not particularly restricted, and any method can be used.

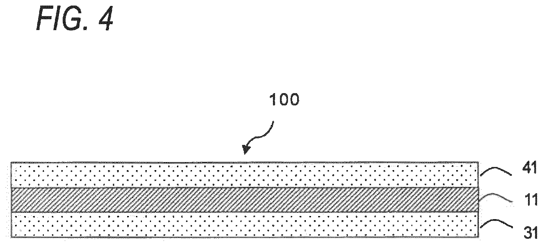

By thermally curing the adhesive layer 11 after bringing the first adherend 31 and the second adherend 41 into contact with each other through the adhesive layer 11, the first adherend 31 and the second adherend 41 are adhered strongly, and an adhered structure 100 illustrated in Fig. 4 can be produced.

In the case of a base material-having adhesive sheet, by bringing the surface of the adhesive layer opposite to the base material and the adherend into contact with each other to provide the base material-having adhesive sheet on the adherend and then heating the adhesive layer, the base material-having adhesive sheet and the adherend can be strongly adhered. That is, an adhered structure of the base material-having adhesive sheet and the adherend can be produced.

Because the adhesive composition in an embodiment of the invention contains a latent curing agent having a reaction initiation temperature of 45°C or higher and 120°C or lower, the adhesive layer formed from the composition can be cured at a relatively low temperature.

The temperature for thermally curing the adhesive layer is, for example, 70°C or higher and 150°C or lower. The temperature for thermally curing the adhesive layer is preferably 75°C or higher, more preferably 80°C or higher. The temperature for thermally curing the adhesive layer is preferably 120°C or lower, more preferably 100°C or lower.

The reaction period for thermally curing the adhesive layer differs with the temperature but is, for example, 5 to 120 minutes, preferably 10 to 60 minutes, more preferably 20 to 40 minutes.

Specifically, curing under any of the heating conditions in (1) to (5) below is preferable.

(1) Heating at a temperature of 70°C or higher and lower than 80°C for 30 to 120 minutes. More preferably, heating for 40 to 100 minutes.
(2) Heating at a temperature of 80°C or higher and lower than 90°C for 20 to 100 minutes. More preferably, heating for 25 to 90 minutes.
(3) Heating at a temperature of 90°C or higher and lower than 100°C for 10 to 60 minutes. More preferably, heating for 15 to 45 minutes.
(4) Heating at a temperature of 100°C or higher and lower than 120°C for 10 to 40 minutes. More preferably, heating for 15 to 30 minutes.
(5) Heating at a temperature of 120°C or higher and lower than 150°C for 5 to 30 minutes. More preferably, heating for 10 to 20 minutes.

The shear strength of the adhesive layer formed in the above manner is preferably 5 MPa or more, more preferably 7 MPa or more, further preferably 10 MPa or more. The shear strength of the adhesive layer is preferably 5 MPa or more because the adhesive layer has excellent adhesiveness and because the first adherend and the second adherend can be easily adhered certainly.

The shear strength of the adhesive layer is measured by the following method.

A curable adhesive sheet which has been cut into a piece of width 25 mm × length 10 mm is adhered to an end of SPCC (JIS G3141) of width 25 mm × length 100 mm × thickness 1.6 mm, and the other SPCC is put thereon. After fixing with a clip, curing is conducted at 80°C for 30 minutes. The test piece thus obtained is pulled with a tension tester AG-X (manufactured by Shimadzu Corporation) in the length direction at 5 mm/min, and the test force at peeling off is measured. The shear strength is calculated by the following equation.

$$\text{Shear Strength (MPa)} = \text{Test Force (N)}/250 \text{ mm}^2$$

EXAMPLES

The embodiments of the invention are explained in more detail below using Examples.

(Sheet Property)

The sheet property was evaluated by whether or not a sheet could be formed from an adhesive composition. The composition was given a mark "A" when a sheet could be formed, and the composition was given a mark "B" when a sheet could not be formed.

(Tackiness)

The tackiness was evaluated by whether or not a produced sheet had tackiness. The sheet was given a mark "A" when the sheet had tackiness, and the sheet was given a mark "B" when the sheet did not have tackiness. In Table 1, "-" indicates that sheet formation, which was necessary for evaluating the tackiness, was not possible.

(Shear Strength)

A curable adhesive sheet which had been cut into a piece of width 25 mm × length 10 mm was adhered to an end of SPCC (JIS G3141) of width 25 mm × length 100 mm × thickness 1.6 mm, and the other SPCC was put thereon. After fixing with a clip, curing was conducted at 80°C for 30 minutes. The test piece thus obtained was pulled with a tension tester AG-X (manufactured by Shimadzu Corporation) in the length direction at 5 mm/min, and the test force at peeling off was measured. The shear strength was calculated by the following equation.

$$\text{Shear Strength (MPa)} = \text{Test Force (N)}/250 \text{ mm}^2$$

In Table 1, "-" indicates that the measurement was not made, and "not measurable" indicates that the shear strength could not be measured because of the lack of the sheet property or the stickiness.

(Reaction Initiation Temperature of Latent Curing Agent)

The reaction initiation temperature of the latent curing agent used in the Examples, the Comparative Example and the Reference Example was measured by the following method.
About 5 mg of a resin composition obtained by mixing 20 parts by mass of the latent curing agent in 100 parts by mass of a bisphenol F-type epoxy (jER806, manufactured by Mitsubishi Chemical Corporation) was weighed in an aluminum closed cell, and the heat flow behavior of the resin composition was obtained using a temperature-modulated DSC (product name "Q-2000", manufactured by TA Instruments Inc.) in a nitrogen atmosphere of 50 mL/min at a heating rate of 2°C/min. The exothermic initiation temperature, which was the temperature at which the heat flow behavior started, was regarded as the reaction initiation temperature of the latent curing agent.

[Production of Adhesive Composition]

(Example 1)

An adhesive composition was prepared by mixing 100 parts by mass of a liquid bisphenol F-type epoxy resin (product name "jER806", manufactured by Mitsubishi Chemical Corporation), 20 parts by mass of an amine compound (product name "Fujicure FXR-1020", manufactured by T&K TOKA Co., Ltd.) as a latent curing agent and 20 parts by mass of a core-shell acrylic resin (product name "Dianal (registered trademark) LP-3106", manufactured by Mitsubishi Chemical Corporation) as a gelling agent. As a result of measurement by the above method, the reaction initiation temperature of the latent curing agent was 54°C.
The adhesive composition obtained above was pressed between two pieces of release paper laminated with polyethylene to a thickness of 200 μm using a manual hydraulic vacuum hot press (product name "11FD", manufactured by Imoto Machinery Co., Ltd), and an adhesive layer was thus formed in a sheet form and left still at 35°C for five days. An uncured curable adhesive sheet was thus obtained.

(Example 2)

Ninety parts by mass of a liquid bisphenol F-type epoxy resin (product name "jER806", manufactured by Mitsubishi Chemical Corporation) and 10 parts by mass of a solid bisphenol F-type epoxy resin (YDF-2005RD, manufactured by Nippon Steel & Sumikin Chemical Co., Ltd.) were heat-melted and mixed. Then, after returning to room temperature, 30 parts by mass of an amine compound (product name "Fujicure FXR-1020", manufactured by T&K TOKA Co., Ltd.) as a latent curing agent and 20 parts by mass of a core-shell acrylic resin (product name "Dianal (registered trademark) LP-3106", manufactured by Mitsubishi Chemical Corporation) as a gelling agent were mixed, and an adhesive composition was thus prepared. The sheet formation was conducted in the same manner as in Example 1 except that the sheet was left still at 35°C for three days.

(Example 3)

A mixture 1 was obtained by heat-melting 15 parts by mass of a liquid aliphatic epoxy resin (product name "SR-4GL", manufactured by Sakamoto Yakuhin Kogyo Co., Ltd.), 30 parts by mass of a solid bisphenol F-type epoxy resin (product name "YDF-2005RD", manufactured by Nippon Steel & Sumikin Chemical Co., Ltd.) and 15 parts by mass of a solid highly heat resistant epoxy resin (product name "HP4700", manufactured by DIC Corporation). A mixture 2 was obtained by mixing 40 parts by mass of a liquid bisphenol F-type epoxy resin (product name "jER806", manufactured by Mitsubishi Chemical Corporation), 30 parts by mass of an amine compound (product name "Fujicure FXR-1020", manufactured by T&K TOKA Co., Ltd.) as a latent curing agent and 10 parts by mass of a core-shell acrylic resin (product name "Dianal (registered trademark) LP-3106", manufactured by Mitsubishi Chemical Corporation) as a gelling agent. Then, the mixture 1 and the mixture 2 were mixed with a kneader, and an adhesive composition was thus obtained. The sheet formation was conducted in the same manner as in Example 1 except that the sheet was left still at 35°C for a day.

(Comparative Example 1)

The same procedures as those in Example 1 were conducted except that the gelling agent was not added.

(Reference Example 1)

The same procedures as those in Example 1 were conducted except that the prepared adhesive composition was left still at 80°C for 10 minutes.

Whether or not each of the examples above had the sheet property and the tackiness was evaluated, and the shear strength thereof was measured. The results are shown in Table 1.

[Table 1]

Table 1

| | Epoxy Resin (100 Parts by Mass) | | | | Latent Curing Agent | Gelling Agent | Storage Condition | Sheet Property | Tackiness | Shear Strength (MPa) |
| | Liquid Epoxy Resin | | Solid Epoxy Resin | | Added Amount (Parts by Mass) | Added Amount (Parts by Mass) | | | | |
| | Bisphenol F-Type Epoxy Resin (jER806) | Aliphatic Epoxy Resin (SR-4GL) | Bisphenol F-Type Epoxy Resin (YDF-2005RD) | Highly Heat Resistant Epoxy Resin (HP4700) | | | | | | |
|---|---|---|---|---|---|---|---|---|---|---|
| Example 1 | 100 | 0 | 0 | 0 | 20 | 20 | 35°C 5 days | A | A | - |
| Example 2 | 90 | 0 | 10 | 0 | 30 | 20 | 35°C 3 days | A | A | - |
| Example 3 | 40 | 15 | 30 | 15 | 30 | 10 | 35°C 1 day | A | A | 14.3 |
| Comparative Example 1 | 100 | 0 | 0 | 0 | 20 | 0 | 35°C 3 days | B | - | Not measurable |
| Reference Example 1 | 100 | 0 | 0 | 0 | 20 | 20 | 80°C 10 minutes | A | B | Not measurable |

In Examples 1 to 3, sheets could be formed, and the sheets had tackiness. Moreover, curing at a low temperature of 80°C was possible. It was confirmed that the sheets of Examples 1 to 3 showed adhesiveness after curing. In particular, it was confirmed that the sheet of Example 3 had high adhesion force after curing.

On the other hand, the adhesive composition in Comparative Example 1 did not contain the gelling agent and thus remained as a liquid, and a sheet could not be formed.

Moreover, in Reference Example 1, in which the adhesive composition in Example 1 was maintained at 80°C for 10 minutes, although a sheet could be formed, curing of the resin advanced, and the tackiness was lost.

Although embodiments have been explained above referring to the drawings, it is needless to mention that the invention is not limited to the examples. It is obvious that one skilled in the art can reach modified examples or corrected examples within the scope described in the claims, and it is understood that the examples of course belong to the technical scope of the invention. The constituent features in the embodiments may be combined freely within the scope which does not deviate from the contents of the invention.

The present application is based on a Japanese patent application filed on March 28, 2019 (patent application No. 2019-065068), and the contents thereof are incorporated in the present application by reference.

REFERENCE SIGNS LIST

1, 2a and 2b. Curable adhesive sheet
11 and 12. Adhesive layer
13 and 14. Release film
21. Base material
31. First adherend
41. Second adherend
100. Adhered structure

**Claims**

1. A curable adhesive sheet having an adhesive layer formed from an adhesive composition containing

   an epoxy resin,
   a latent curing agent and
   a gelling agent,
   wherein the latent curing agent has a reaction initiation temperature of 45°C or higher and 120°C or lower.

2. The curable adhesive sheet according to claim 1, wherein the latent curing agent is an amine-based compound.

3. The curable adhesive sheet according to claim 1 or 2 which contains 15 to 40 parts by mass of the latent curing agent based on 100 parts by mass of the epoxy resin.

4. The curable adhesive sheet according to any one of claims 1 to 3, wherein the gelling agent is a core-shell acrylic resin.

5. The curable adhesive sheet according to any one of claims 1 to 4 which contains 5 to 40 parts by mass of the gelling agent based on 100 parts by mass of the epoxy resin.

6. The curable adhesive sheet according to any one of claims 1 to 5, wherein 50 mass% or less of the epoxy resin is an epoxy resin which is solid at 25°C.

7. A method for producing a curable adhesive sheet including

   a step (1) of preparing an adhesive composition containing an epoxy resin, a latent curing agent having a reaction initiation temperature of 45°C or higher and 120°C or lower and a gelling agent, and
   a step (2) of forming an adhesive layer in a sheet form formed from the adhesive composition and maintaining at 30°C to 43°C to form a sheet.

FIG. 1

FIG. 2

(a)

2a

11
21

(b)

2b

12
21
11

FIG. 3

11

31

FIG. 4

100

41

11

31

## INTERNATIONAL SEARCH REPORT

| International application No. |
| --- |
| PCT/JP2020/011847 |

**A. CLASSIFICATION OF SUBJECT MATTER**
Int.Cl. C09J7/35(2018.01)i, C09J7/38(2018.01)i, C09J11/06(2006.01)i,
C09J11/08(2006.01)i, C09J163/00(2006.01)i
FI: C09J7/35, C09J163/00, C09J11/08, C09J11/06, C09J7/38
According to International Patent Classification (IPC) or to both national classification and IPC

**B. FIELDS SEARCHED**

Minimum documentation searched (classification system followed by classification symbols)
Int.Cl. C09J, B32B

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 10-168400 A (LINTEC CORPORATION) 23.06.1998<br>(1998-06-23), claims, paragraphs [0001]-[0003],<br>[0005]-[0013], examples | 1-6<br>7 |
| Y | JP 2016-186843 A (AJINOMOTO CO., INC.) 27.10.2016<br>(2016-10-27), paragraphs [0050], [0051] | 1-6 |
| Y | JP 2012-224733 A (MITSUI CHEMICALS, INC.)<br>15.11.2012 (2012-11-15), claims, paragraphs<br>[0001], [0014], [0018], [0021], [0034]-[0036] | 1-6 |
| Y | JP 09-157620 A (MATSUSHITA ELECTRIC INDUSTRIAL<br>CO., LTD.) 17.06.1997 (1997-06-17), paragraphs<br>[0002]-[0007], examples | 1-6 |
| A | WO 2011/062149 A1 (HITACHI CHEMICAL CO., LTD.)<br>26.05.2011 (2011-05-26), claims, paragraphs<br>[0002]-[0006], [0008], [0048]-[0050], examples<br>particularly, example 4, paragraphs [0085], [0088] | 1-7 |

☐ Further documents are listed in the continuation of Box C.  ☒ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>27.05.2020 | Date of mailing of the international search report<br>09.06.2020 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT
Information on patent family members

International application No.

PCT/JP2020/011847

| | | |
|---|---|---|
| JP 10-168400 A | 23.06.1998 | (Family: none) |
| JP 2016-186843 A | 27.10.2016 | (Family: none) |
| JP 2012-224733 A | 15.11.2012 | (Family: none) |
| JP 09-157620 A | 17.06.1997 | US 2002/0122915 A1<br>paragraphs [0002]-[0007], examples<br>WO 1997/020898 A1<br>EP 866109 A1<br>CN 1203621 A<br>KR 10-1999-0071936 A |
| WO 2011/062149 A1 | 26.05.2011 | JP 2015-91957 A<br>CN 102686690 A<br>KR 10-2012-0087978 A<br>BR 112012011798 A<br>TW 201144404 A<br>CN 104877611 A |

Form PCT/ISA/210 (patent family annex) (January 2015)

**EP 3 950 869 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013525984 A